(19) Europäisches Patentamt / European Patent Office / Office européen des brevets

(11) **EP 4 094 196 B1**

(12) **EUROPEAN PATENT SPECIFICATION**

(45) Date of publication and mention of the grant of the patent:
**10.09.2025 Bulletin 2025/37**

(21) Application number: **21703903.1**

(22) Date of filing: **05.02.2021**

(51) International Patent Classification (IPC):
$G06N\ 3/092$ (2023.01)  $\quad$ $G06N\ 20/20$ (2019.01)
$G06N\ 3/008$ (2023.01)  $\quad$ $G06N\ 3/045$ (2023.01)
$G06Q\ 10/047$ (2023.01)  $\quad$ $G06Q\ 10/063$ (2023.01)
$G06Q\ 50/04$ (2012.01)  $\quad$ $G06Q\ 50/06$ (2024.01)
$G06N\ 3/006$ (2023.01)  $\quad$ $G06N\ 3/044$ (2023.01)
$G06N\ 3/0464$ (2023.01)

(52) Cooperative Patent Classification (CPC):
**G06N 3/006; G06N 3/045; G06N 3/092; G06Q 10/047; G06Q 10/063; G06Q 50/04; G06Q 50/06;** G06N 3/044; G06N 3/0464; Y02P 90/30

(86) International application number:
**PCT/EP2021/052813**

(87) International publication number:
**WO 2021/156441 (12.08.2021 Gazette 2021/32)**

(54) **LEARNING MACHINE LEARNING INCENTIVES BY GRADIENT DESCENT FOR AGENT COOPERATION IN A DISTRIBUTED MULTI-AGENT SYSTEM**

LERNANREIZE DURCH GRADIENTENABSTIEG FÜR DIE ZUSAMMENARBEIT VON AGENTEN IN EINEM VERTEILTEN MULTIAGENTENSYSTEM

APPRENTISSAGE D'INCITATIONS D'APPRENTISSAGE AUTOMATIQUE PAR DESCENTE DE GRADIENT POUR UNE COOPÉRATION D'AGENTS DANS UN SYSTÈME MULTI-AGENT RÉPARTI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2020 US 202062971730 P**

(43) Date of publication of application:
**30.11.2022 Bulletin 2022/48**

(73) Proprietor: **DeepMind Technologies Limited London EC4A 3TW (GB)**

(72) Inventor: **GEMP, Ian Michael London N1C 4AG (GB)**

(74) Representative: **Marks & Clerk GST 1 New York Street Manchester M1 4HD (GB)**

(56) References cited:
**US-A1- 2019 354 867**

• HONGBIGN WANG ET AL: "Integrating Reinforcement Learning with Multi-Agent Techniques for Adaptive Service Composition", ACM TRANSACTIONS ON AUTONOMOUS ADOPTIVE SYSTEM, ASSOCIATION FOR COMPUTING MACHINERY, INC., NEW YORK, NY, US, vol. 12, no. 2, 25 May 2017 (2017-05-25), pages 1 - 42, XP058339099, ISSN: 1556-4665, DOI: 10.1145/3058592
• LEI LEI ET AL: "Deep Reinforcement Learning for Autonomous Internet of Things: Model, Applications and Challenges", ARXIV.ORG, CORNELL UNIVERSITY LIBRARY, 201 OLIN LIBRARY CORNELL UNIVERSITY ITHACA, NY 14853, 22 July 2019 (2019-07-22), XP081445712

## Description

BACKGROUND

This specification relates to machine learning, and in example implementations to reinforcement learning.

In a reinforcement learning system, an agent interacts with an environment by performing actions that are selected by the reinforcement learning system in response to receiving observations that characterize the current state of the environment. Some reinforcement learning systems select the action to be performed by the agent in response to receiving a given observation in accordance with an output of a neural network.

Neural networks are machine learning models that employ one or more layers of nonlinear units to predict an output for a received input. Some neural networks are deep neural networks that include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Wang et al., "Integrating Reinforcement Learning with Multi-Agent Techniques for Adaptive Service Composition", ACM Transactions on Autonomous and Adaptive Systems, Association For Computing Machinery, 12(2) Article 8, May 2017, pages 1-42, describes a multi-agent Q-learning algorithm in which the agents have the same ability, use the same learning algorithm, and work for a common goal. US2019/354867 describes a system that, during training, uses combined action selection policies that are a combination, in accordance with weights in mixing data, of individual action selection policies.

SUMMARY

This specification describes machine learning technologies which enable agents to learn to cooperate with one another in a way that improves their collective efficiency. More particularly, an agent learns to modify its goal based on the behavior of other agents, enabling a better overall result to be achieved than if each agent pursued an individual "selfish" goal. In implementations the agents operate in a real-world environment.

There is described a computer-implemented method in accordance with independent claim 1.

The method comprises receiving, e.g. at the first machine learning system, from each of the other machine learning systems, a respective machine learning, e.g. reinforcement learning, objective-defining value used for training the other machine learning system. The objective-defining value, which may be referred to as an "incentive", is used to define a training objective and may be e.g. a reward value or loss.

The method further comprises determining a perturbed i.e. combined objective-defining value from a combination of a first machine learning, e.g. reinforcement learning, objective-defining value for the first machine learning system and the objective-defining values received from the other machine learning systems. The combination is defined by a set of mixing parameters (later $A_i$). The objective-defining values may be rewards and the combined objective-defining value may be a combined reward.

The method may further comprise training the first machine learning system using the combined objective-defining value, in particular training the first machine learning system using a machine learning technique to optimize the combined objective-defining value.

The method further comprises adjusting the set of mixing parameters using gradient descent to optimize an (in)efficiency estimate metric (later $\tilde{\rho}_i$), in particular an (in)efficiency estimate metric for the first machine learning system, which in implementations represents a contribution of the first machine learning system to an overall (in)efficiency estimate for the group of agents. The adjusting may be performed concurrently with the machine learning. In implementations the (in)efficiency estimate metric is dependent upon a rate of change of the combined objective-defining value with time. The combined objective-defining value may be summed or averaged e.g. over multiple action-selection time steps or over a machine learning episode, and/or discounted, before determining the rate of change.

Thus the rate of change of the combined objective-defining value with time may have a value which is used as a metric which the system learns to improve.

This metric may be understood as relating to an efficiency, in implementations specifically an inefficiency, of the group of agents. The method effectively uses this metric to set a learning goal for the first agent, i.e. to define a combined objective value for the first machine learning system, so that the first agent is incentivized to learn to cooperate with the other agents.

Each of the agents may be incentivized in this way. Thus in implementations each of the machine learning systems implements the above-described method.

In implementations the efficiency estimate metric represents a contribution of the first machine learning system i.e. first agent to an overall (in)efficiency of the group of agents. This overall (in)efficiency may represent a so-called price of anarchy for the group of agents i.e. a difference between, or ratio of, an equilibrium value of a total loss for the group of agents without any mixing, and the smallest total loss that could be achieved with fully cooperative agents.

When the objective-defining values of the other agents are mixed with those of the first agent the goal of the first agent is modified. The modification of the mix depends on the rate of change of the combined objective-defining value with time. This can allow the group of agents to escape a Nash equilibrium, where each agent has optimized its "selfish" goal but where the overall performance of the group of agents, e.g. as measured by their collective losses or rewards, could be improved were the goals of the agents to change. For example, this can allow the group of agents, collectively, to escape Braess's "paradox", a non-intuitive effect in which providing an additional resource which all agents selfishly use, results in decreased overall performance.

Thus in implementations the efficiency estimate comprises a cost or "price", and optimizing the efficiency estimate involves minimizing this cost. The cost may have a higher value when the (average) combined objective-defining value is worsening with time than when the (average) combined objective-defining value is improving with time. Thus the efficiency estimate may have a relatively lower or zero value when the (average) combined objective-defining value is improving with time, e.g. reducing loss or increasing reward, and a relatively higher value when the (average) combined objective-defining value is worsening with time. Since in implementations a gradient of the (average) efficiency estimate with respect to the mixing parameters depends on the value of the efficiency estimate, this gradient may vary in the same way as the value of the efficiency estimate.

Thus the set of mixing parameters may be adjusted more when the (average) combined objective-defining value is worsening with time and less or not at all when it is improving, e.g. by applying a ReLU (rectified linear unit) function to the (average) rate of change of the combined objective-defining value with time. As described later, the efficiency estimate may be a component (for the first agent) of a price of anarchy or price of stability for the group of agents, that is a price of inefficiency of the machine learning e.g. reinforcement learning.

Adjusting the set of mixing parameters using gradient descent may comprise determining a set of gradients (later $\nabla_{A_i}$) of the efficiency estimate with respect to the set of mixing parameters (later $A_i$), and adjusting the set of mixing parameters using the set of gradients. This may comprise adjusting $A_i$ by $-\eta \nabla_{A_i}$ where $\eta$ is a learning rate; it need not involve determining the efficiency estimate explicitly.

The set of gradients of the efficiency estimate may be determined "locally" to the current action selection policies of the group of agents, in particular to a current action selection policy of the first reinforcement learning system.

In some implementations determining the set of gradients of the efficiency estimate includes adding a regularization term (later, the v-term) to the set of gradients to inhibit adjusting the set of mixing parameters (weights) away from the first reinforcement learning objective-defining value e.g. away from their initial values. This can help to reduce the risk of inequity amongst the agents.

In implementations determining, more particularly stochastically estimating, the set of gradients of the efficiency estimate comprises applying a trial modification to the set of mixing parameters to determine a trial set of mixing parameters. The efficiency estimate is then determined using a trial i.e. perturbed combined objective-defining value for the first reinforcement learning system, defined by the trial set of mixing parameters. The trial modification may be in a direction (in a space defined by the set of mixing parameters) chosen by sampling e.g. from a unit sphere; the set of gradients may then be in the same direction. The set of mixing parameters may be adjusted in the opposite direction if the (mean) combined objective-defining value e.g. mean return, worsens while the trial modification to the set of mixing parameters is applied.

Determining the efficiency estimate comprises estimating a rate of change of the (average) trial perturbed objective-defining value with time. This may involve determining a change in the trial combined objective-defining value over multiple machine learning time steps, for example over one or more machine learning, e.g. reinforcement learning, episodes. This may be a stochastic estimate e.g. determined by a finite difference method. For example determining the efficiency estimate may comprise determining a difference between first and second mean returns of the trial combined objective-defining value at the start and end of a trial period.

In some implementations determining the combined objective-defining value comprises determining a weighted linear combination of the first reinforcement learning objective-defining value and the reinforcement learning objective-defining values received from the other reinforcement learning systems. In other implementations the objective-defining values may be combined in a more complex manner.

Implementations of the method may also involve sending the objective-defining value for the first machine learning system, e.g. a reward received by the first machine learning system, to each of the one or more other machine learning e.g. reinforcement learning systems. This may be done at each machine learning time step. In implementations the reward received by the first machine learning system is sent to each other machine learning system $j$ weighted by a respective weight (later $A_{ij}$) for machine learning system $j$. Alternatively the rewards may be broadcast without applying a weight and the weights may be shared e.g. machine learning system i may receive a mixing weight for each reward it receives from each of the other machine learning systems.

In implementations the first machine learning system is a reinforcement learning system that includes an action selection policy neural network configured to receive observations of the environment and to select the actions to be performed by the first agent in response to the observations. The policy neural network may have a plurality of policy neural network parameters and training the first reinforcement learning system may comprise adjusting the policy neural network parameters using gradient descent to optimize the combined objective-defining value. The first reinforcement learning objective-defining value and the reinforcement learning objective-defining values from the other reinforcement learning systems may each comprise the value of a loss function or reward dependent upon an action, respectively, of the first agent and of the one or more other agents.

The first and other reinforcement learning systems may implement any type of reinforcement learning; they may even implement different reinforcement learning algorithms. For example, one or more of the reinforcement learning systems may be: a policy-based system such as an Advantage Actor Critic system (Mnih et al. 2016) which parameterizes a stochastic action-selection policy i.e. determines parameters of a distribution over possible actions, and optionally parameterizes a state value function; or a Q-learning system, such as a Deep Q-learning Network (DQN) system or Double-DQN system, in which the output approximates an action-value function, and optionally a value of a state, for selecting an action. One or more of the reinforcement learning systems may be a distributed reinforcement learning system such as IMPALA, Espholt et al., arXiv:1802.01561. One or more of the reinforcement learning systems may have a policy neural network with an action selection output which directly defines the action to be performed by the agent, such as DDPG, arXiv:1509.02971, e.g., by defining the values of torques that should be applied to the joints of a robotic agent or the values of accelerations to be applied to a robot or vehicle drive.

For example, in one implementation, one or more of the reinforcement learning systems may implement a reinforcement learning technique which trains an action selection policy neural network using an actor-critic technique. The action selection policy neural network, or another neural network, may be configured to generate a value estimate in addition to an action selection output. The value estimate represents an estimate of a return e.g. a time-discounted return that would result, given the current state of the environment, from selecting future actions performed by the agent in accordance with the current values of the action selection network parameters. The reinforcement learning may train the action selection policy network using gradients of a reinforcement learning objective function $\mathcal{L}_{RL}$ given e.g. by:

$$\mathcal{L}_{RL} = \mathcal{L}_\pi + \alpha\mathcal{L}_V + \beta\mathcal{L}_H$$

$$\mathcal{L}_\pi = -\mathbb{E}_{s_t \sim \pi}\left[\hat{R}_t\right]$$

$$\mathcal{L}_V = \mathbb{E}_{s_t \sim \pi}\left[\left(\hat{R}_t - V(s_t, \theta)\right)^2\right]$$

$$\mathcal{L}_H = -\mathbb{E}_{s_t \sim \pi}\left[H\big(\pi(\cdot \,|s_t, \theta)\big)\right]$$

where $\alpha$ and $\beta$ are positive constant values, $\mathbb{E}_{s_t \sim \pi}[\cdot]$ refers to the expected value with respect to the current action selection policy (i.e. defined by the current values of the action selection policy network parameters $\theta$), $V(s_t, \theta)$ refers to the value estimate generated by the action selection policy network for observation $s_t$, $H(\pi(\cdot\,|s_t, \theta))$ is a regularization term that refers to the entropy of the probability distribution over possible actions generated by the action selection network for observation $s_t$, and $\hat{R}_t$ refers to an n-step look-ahead return, based on the combined reward, e.g., given by:

$$\hat{R}_t = \sum_{i=1}^{n-1} \gamma^i r_{t+i} + \gamma^n V(s_{t+n}, \theta)$$

where $\gamma$ is a discount factor between 0 and 1, $r_{t+i}$ is the (combined) reward received at time step $t+i$, and $V(s_{t+n}, \theta)$ refers to the value estimate at time step $t+n$. In some variants of this approach one or both of the $\alpha\mathcal{L}_V$ and $\beta\mathcal{L}_H$ terms in $\mathcal{L}_{RL}$ may be omitted.

In some implementations each of the machine learning, e.g. reinforcement learning, systems may implement a method as described above. Each of the agents may be performing the same task (i.e. the same type of task), in a shared environment. Here "same task" means a task of the same type, e.g. a routing task, but typically not an identical task (e.g. because the agents have different start/end nodes to route between).

The subject matter described in this specification can be implemented in particular embodiments so as to realize one or more of the following advantages.

Some implementations of the described methods address a problem encountered when agents interact when learning to perform tasks in a shared environment: the agents can learn to perform the tasks, but are overall less efficiently than if they were to cooperate. Cooperation could be imposed by a centralized authority, but this imposes a management overhead and results in a single point of failure. The described techniques enable agents in a decentralized system to learn to cooperate to solve a task efficiently, for example faster or consuming fewer resources than would otherwise be the case. In particular the described techniques enable agents to learn to cooperate with minimal communication between the agents. In multi-agent systems communications amongst all the agents can be a particular burden. The described techniques can significantly reduce the amount of data which needs to be communicated compared to e.g. sharing high dimensional observations or actions, thus reducing communications bandwidth and consequently power consumption, which is especially useful for mobile agents.

In implementations this is achieved by each agent automatically learning to adjust a goal or incentive used by its machine learning. This is done mixing its incentives with those of other agents in such a way that, collectively, the agents learn to cooperate and perform their individual respective tasks more efficiently. Gradient-based learning is used to minimize a decentralized measure of inefficiency, and hence an agent is able to adjust its individual inventive to improve the collective efficiency.

Broadly, each agent pays attention to the goals of the other agents by receiving scalar values indicating values of their loss functions or rewards e.g. by message passing. An agent can thus learn to deviate from "selfish" behavior, thereby enhancing overall efficiency. This can also allow asymmetric policies to develop where if say, one agent finds a short-cut the others avoid it so that it does not become congested. In this way implementations of the system can learn to avoid Braess's paradox. In some contexts the approach may allow different agents to specialize, each focusing on controlling the losses it can decrease.

The described techniques are applicable to many different kinds of routing and other problem. For example in the context of agents controlling autonomous vehicles more efficient routes can be learned, reducing overall energy consumption and speeding up average or maximum journey times. In the context of an electrical power grid, the techniques can increase network stability and efficiency of power transfer, particularly as grids evolve to be more decentralized, including more sources of renewable power. In the context of a computer network the efficiency of packet data communications can be increased e.g. increasing bandwidth, reducing packet latency, or increasing packet transmission reliability. In the context of a manufacturing plant, agents can learn to cooperate to control items of equipment so that the plant runs efficiently.

The details of one or more embodiments of the subject matter of this specification are set forth in the accompanying drawings and the description below.

BRIEF DESCRIPTION OF THE DRAWINGS

FIG. 1 shows a multi-agent machine learning system.
FIG. 2 shows an example process for training one of the machine learning systems of FIG. 1.
FIG. 3 shows an example process for one of the mix adjust systems of FIG. 1.
FIGS. 4a-4c illustrate operation of the system of FIG. 1 in a toy environment.

Like reference numbers and designations in the drawings indicate like elements.

DETAILED DESCRIPTION

This specification describes techniques for learning in multi-agent systems. Such systems are common in the real world and may include, for example, autonomous vehicles such as robots which interact whilst performing a task (e.g. warehouse robots), factory or plant automation systems, and computer systems. In such cases the agents may be the robots, items of equipment in the factory or plant, or software agents in a computer system which e.g. control the allocation of tasks to items of hardware or the routing of data on a communications network.

The agents may use machine learning to learn to perform the task(s). Typically machine learning techniques independently aim to optimize an objective, but this can lead to inefficiencies at the group level. One approach addressing such problems is to use a central coordinator but this lacks scalability and provides a single point of failure. However decentralized techniques typically involve communication of significant amounts of data, e.g. describing observations or actions of the individual agents, and this raises problems of communication bandwidth and also excessive power consumption as such communications, which are often wireless, require energy. This specification describes techniques for multi-agent learning which are both bandwidth and power efficient, and using which agents are able to learn to cooperate to perform a task efficiently.

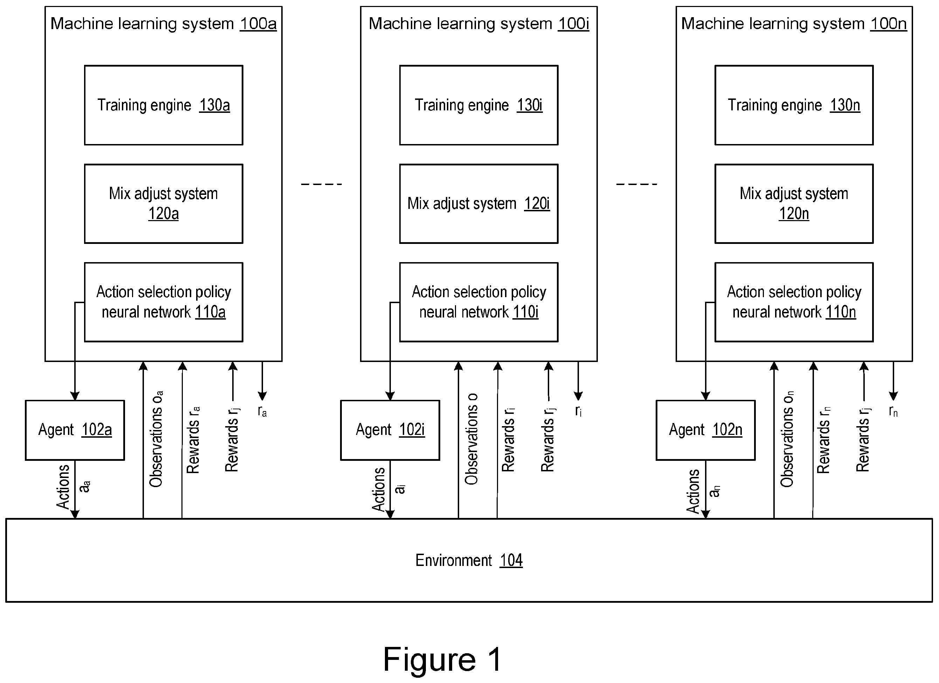

Figure 1 shows a multi-agent machine learning system comprising multiple machine learning systems 100a,i,n each of which is configured to control a respective agent 102a,i,n. Each machine learning system 100a,i,n may be implemented as computer programs on one or more computers in one or more locations. In implementations, but not essentially, the machine learning systems are reinforcement learning systems.

The agents 102a,i,n operate in a common environment 104 each to perform a respective task. In general, how one agent performs its task affects how another of the agents is able to perform its task. For convenience machine learning system 100i and agent 102i are described; the others are similar.

At each of multiple action-selection time steps machine learning system 100i selects an action $a_i$ to be performed by agent 102i in response to an observation $o_i$ characterizing a state of the environment. The observation may include an image of the environment and/or other sensor or input data from the environment. Such observations are typically pre-processed e.g. by one or more convolutional neural network layers, and/or one or more recurrent neural network layers.

The machine learning system 100i may also receive a reward $r_i$ as a result of performing the action $a_i$. In general the reward is a numerical value, i.e. a scalar, and may be based on any event or aspect of the environment. For example, the reward $r_i$ may indicate whether the agent 102i has accomplished the task (e.g., for a manipulation task or navigating to a target location in the environment), or progress of the agent 102i towards accomplishing the task. Interactions of the agent 102i with the environment to perform the task may define episodes. An episode may end with a terminal state e.g. indicating whether the task was performed or not, or after a specified number of action-selection time steps.

The machine learning system 100i is configured to broadcast the reward $r_i$ it receives at each action-selection time step to each of the other machine learning systems, e.g. via a wired or wireless communications link. Similarly at each action selection time step machine learning system 100i receives the rewards, denoted $r_j$, broadcast by each of the other machine learning systems, e.g. via the same or another wired or wireless communications link. More specifically, as described later machine learning system 100i transmits reward $r_i$, weighted by a respective mixing parameter for the recipient machine, to each other machine learning system, and receives rewards $r_j$ weighted by respective mixing parameters.

The machine learning system 100i includes a training engine 130i which is configured to use the rewards $r_i$ it receives, and the (weighted) rewards $r_j$ received by the other machine learning systems, to train the machine learning system 100i to select actions for performing the task. More particularly the training engine 130i is configured to combine the reward $r_i$ and rewards $r_j$ at each action selection time step, e.g. in a linear combination, and to use the combined rewards to learn to train the machine learning system 100i to perform the task.

Although some implementations train the machine learning system 100i using the combined reward, in principle other objective-defining values could be shared, combined, and used for training. For example some implementations may share the value of a return, i.e. a cumulative reward such as a time-discounted sum of rewards, or the value of a modified reward, or the value of a reinforcement learning loss function. In general each of these example values is a single scalar quantity. Implementations in which the objective-defining values are rewards are described merely as an example.

The multi-agent machine learning system described herein may use any suitable machine learning technique to train the machine learning system 100i using the combined objective-defining value, e.g. the combined rewards - the techniques described herein are not dependent on the use of any particular training technique. Some example implementations of the system use reinforcement learning.

In implementations the actions performed by agent 102i are selected by an action selection policy neural network 110i, which is trained by the training engine 130i using a machine learning technique e.g. a reinforcement learning technique. The action selection policy neural network 110i is trained using the combined objective-defining value, e.g. the combined rewards, as a training objective.

An output of the action selection policy neural network 110i may comprise, for example, action selection scores according to which the action is selected, or the output may determine the action directly, or the output may parameterize a distribution e.g. a Gaussian distribution, according to which the action may be selected stochastically. Depending upon the implementation the machine learning system 100i may include more components than those shown in Figure 1, e.g. a value function neural network.

The combination of the reward $r_i$ and the rewards $r_j$ is made according to a set of mixing parameters, which may be represented as a vector of weights for agent 102i, $A_i$, with one weight for agent 102i and one weight for each of the other agents. Each weight may be e.g. in the range [0,1] and the weights may be constrained to sum to 1.

The weights, $A_i$, for agent 102i may be determined by a mix adjust system 120i. The mix adjust system 120i may adjust the weights for the rewards, i.e. the mixing parameters, so as to encourage the agents to cooperate. In implementations this is done by using gradient descent to optimize a metric which may be described as an efficiency estimate, more particularly by using gradient descent to minimize an inefficiency estimate. In implementations the metric is dependent upon a rate of change of the combined reward with time, in particular when averaged over multiple action-selection time steps e.g. when averaged over an episode. In some implementations the metric is dependent upon a rate of change of the return, e.g. a discounted return, from an episode (where the return is evaluated using the combined reward). In general the efficiency estimate metric may be dependent upon an averaged combined objective-defining value, e.g. average combined reward, or upon the return.

A trial modification, e.g. a small perturbation, is made to the set of mixing parameters. The trial modification may have a direction defined, effectively, by a change in direction of the vector of weights. If the averaged combined reward, or return, is increasing i.e. the combined loss is decreasing, the trial modification is maintained, otherwise the mixing parameters are adjusted, in particular in the opposite direction to that of the trial modification. When the mixing parameters are adjusted they may be adjusted by an amount dependent on a gradient of the efficiency estimate metric with respect to the mixing parameters e.g. by the product of this gradient and a learning step size.

When repeated this process encourages cooperation between the agents. Use of the combined reward enables one agent to donate part of that agent's reward to another or, equivalently, it allows the agents to share losses, which allows one agent to learn to help another in performing its task.

In implementations the (in)efficiency estimate represented by the metric, which is later denoted $\tilde{\rho}_i$, is an estimate of a contribution of the first machine learning system 100i, i.e. of agent 102i, to an upper bound on a so-called price of anarchy for the multi-agent system. The price of anarchy may be defined as a difference between, or ratio of, a sum of losses of the agents and that which could be achieved by fully cooperative agents. In implementations the price of anarchy is "local" in the sense that it relates to a local region of the strategy space i.e. that defined by the set of mixing parameters for agent 102i.

In implementations the mixing parameters are adjusted to minimize the (in)efficiency estimate represented by the metric. This results in the first machine learning system 100i having a combined objective-defining value which defines a learning objective for the first machine learning system 100i that enables the first machine learning system 100i to learn to select actions which take account of actions selected by (i.e. the action selection policies of) the other machine learning systems. That is, agent 102i learns to cooperate with the other agents.

When the technique is implemented by each agent, the behavior of the group of agents as a whole converges to behavior, i.e. a set of action selection policies for the agents, which tends to minimize the price of anarchy. That is, the action selection policies for the agents converge towards achieving collectively for the group, a sum of rewards (to be maximized), or losses (to be minimized), which approaches that which would be achieved by fully cooperative agents.

In implementations this can be achieved by each machine learning system transmitting or broadcasting just a single scalar value, its machine learning objective-defining value, e.g. reward or return, to each of the other machine learning systems. Thus the agents can learn to cooperate with a relatively small additional power and communications bandwidth.

Depending upon the environment, where the agents are fully cooperative maximizing the collective reward can result in solutions which are not egalitarian. For example one or more agents may sacrifice themselves by taking no reward to improve the collective reward. This is typically undesirable in an engineering context, e.g. in a communications system it could result in no data packets being transmitted. The techniques described herein appear to avoid such undesirable scenarios.

In some implementations the multi-agent machine learning system of Figure 1 is a fully distributed, peer-to-peer system, lacking a master, coordinating node. This provides robustness as there is no single point of failure. In some implementations functions of the mix adjust system 120i for each machine learning system 100i may be performed by a shared, coordinating system (not shown in Figure 1). Then the coordinating system may receive an averaged combined reward or return from each machine learning system e.g. at the end of each episode and, periodically, a set of mixing parameters from each of the machine learning systems.

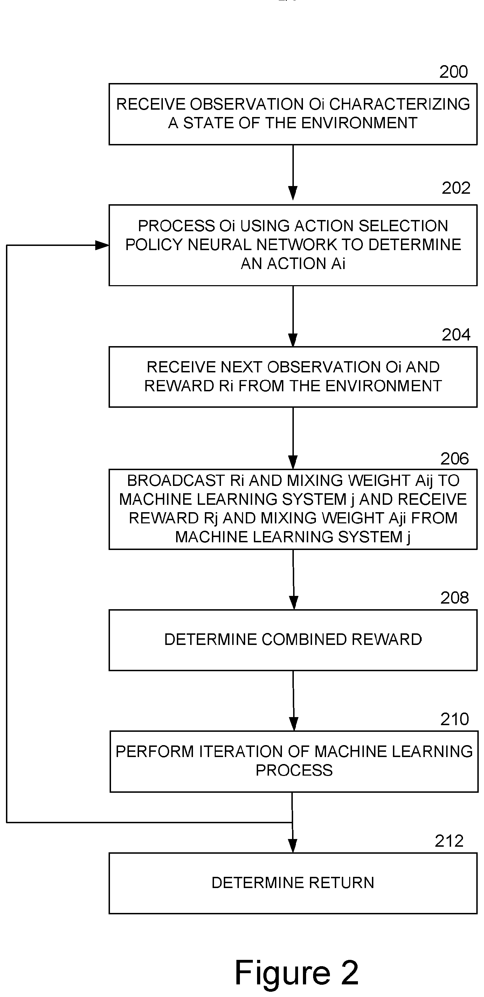

Figure 2 is a flow diagram of an example process for training the action selection policy neural network 110i of machine learning system 100i. The process of Figure 2 may be implemented on each of the machine learning systems 100a,i,n of Figure 1. The process uses a set of mixing parameters from mix adjust system 120i, here a vector of weights, $A_i$, for agent 102i. The steps shown in Figure 2 may be performed for each action selection time step, repeatedly e.g. until the end of a training episode.

The process begins with machine learning system 100i receiving an observation $o_i$ characterizing a current state of the environment (step 200). The observation may comprise e.g. data from one or more sensors of or inputs to the agent, e.g. image data from a camera and/or motion data representing motion of the agent in the environment, and may include data representing an instruction provided to the agent 102i. The observation may be preprocessed e.g. by one or more neural network systems, and is then processed by the action selection policy neural network 110i (step 202) to determine an action $a_i$ for agent 102i to perform.

In response to the action $a_i$ the environment transitions to a new state and the machine learning system 100i receives another observation $o_i$ characterizing the new state of the environment and a reward $r_i$, e.g. a numeric value as a result of agent 102i performing the action (step 204). The reward $r_i$ may indicate that the new state is closer to one in which the task of agent 102i is completed.

The machine learning system 100i then broadcasts, i.e. transmits, the reward $r_i$ to the other machine learning systems and receives a corresponding reward $r_j$ from each of the other machine learning systems (step 206). In implementations the reward $r_i$ is transmitted to each of the other machine learning systems weighted by a respective weight i.e. machine learning system 100i transmits weighted reward $A_{ij}r_i$. The reward and the weight may be transmitted a single scalar product to machine learning system $j$, or separately. Similarly machine learning system 100i receives weighted reward $A_{ji}r_j$ from machine learning system $j$. This involves transmitting a set of $n$ scalar values. In some other implementations the rewards and mixing weights may be shared separately (transmitting 2n scalars). A combined reward $\bar{r}_i$ is then determined by machine learning system 100i by combining the reward $r_i$ and rewards $r_j$ each weighted according to the set of mixing parameters, e.g. according to $\bar{r}_i = \sum_j A_{ji}r_j$ where $A_{ji}$ is the weight of the $j$th reward for agent 102i and the sum includes a weighted reward $r_i$ (step 208).

The process then performs an iteration of a machine learning technique using as a reward the combined reward $\bar{r}_i$ (step 210). For example the combined reward $\bar{r}_i$ may be used to define a loss function in a TD (temporal difference) learning method or a policy gradient loss of a policy gradient learning technique. The training engine 130i may then the machine learning system 100i, in particular the action selection policy neural network 110i, to minimize this loss. In some implementations the machine learning technique is a model-based or model-free reinforcement learning technique. Merely by way of example the reinforcement learning technique may be an actor-critic technique.

The process loops back to process the next observation (step 202) until the end of an episode is reached. The process then determines a return, $g$, (step 212) e.g. from a sum or average, optionally time discounted, of the combined reward received at each of the action time selection time steps. Each training episode may define a mixing trial time step of a mix adjust process as described below.

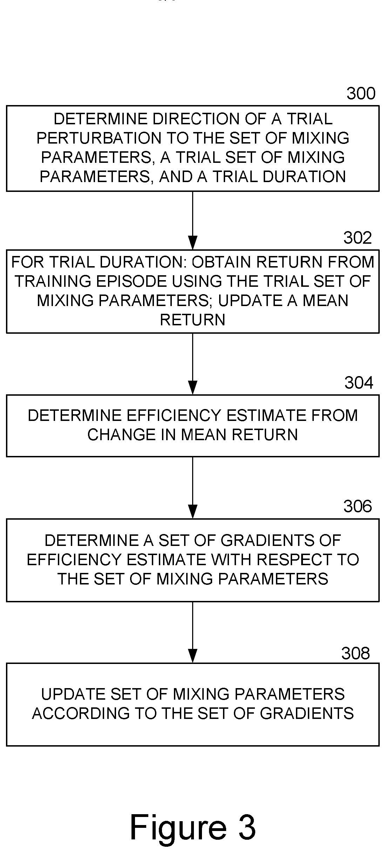

Figure 3 is a flow diagram of an example process for adjusting the set of mixing parameters used for determining the combined reward in the process of Figure 2. The process of Figure 3 may be performed by the mix adjust system 120i of machine learning system 100i, for agent 102i, and may be implemented on each of the machine learning systems 100a,i,n; or the process may be performed by a separate component of the multi-agent machine learning system.

Initially, at step 300, the process may determine a direction in which to adjust the set of mixing parameters. For a n-dimensional vector of weights $A_i$, i.e. for n machine learning systems, this may comprise randomly selecting a n-dimensional direction $\tilde{a}_i$ e.g. drawn uniformly from a unit n-sphere. The process may then determine a perturbed, trial set of mixing parameters, $\tilde{A}_i$, perturbed in a direction of $\tilde{a}_i$; the trial set of mixing parameters may be subject to a constraint that the perturbed weights sum to 1. For example the process may determine $\tilde{A}_i = softmax(\log(A_i) + \delta \, \tilde{a}_i)$ where $\delta$ may be a fixed scalar step size. Optionally the process may also determine a random trial duration e.g. constrained between upper and lower duration limits, as a number of mixing trial time steps, i.e. training episodes, to be performed.

The process may then monitor the return from each training episode for the duration of the trial, using this to determine a noisy estimate of a set of gradients of the efficiency estimate metric with respect to the set of mixing parameters.

In more detail, the returns, $g$, from each episode are averaged over the duration of the trial to provide a mean return, $G$ (step 302). When the trial is complete the process then determines a value for the efficiency estimate, $\tilde{\rho}_i$, from a change in the mean return (step 304). As mentioned above, the efficiency estimate, $\tilde{\rho}_i$, may represent a contribution of agent 102i to an upper bound on the price of anarchy for the system. The efficiency estimate, $\tilde{\rho}_i$, may be determined as

$$\tilde{\rho}_i = ReLU\left(\frac{G_b - G}{\tau} + \epsilon\right)$$

where $G_b$ is a baseline mean return at the start of the trial, $G$ is the mean return at the end of the trial, $\tau$ is the trial duration in mixing trial time steps, $ReLU(\cdot)$ is a rectifier function (with a value of zero if the argument is less than zero), and $\varepsilon$ is a hyperparameter. The value of $\varepsilon$ shifts the origin of the rectifier function; the value may be zero, or greater than zero (and may be chosen according to the size of $G$).

The process then determines an estimated set of gradients of the efficiency estimate with respect to the set of mixing parameters (step 306). The estimated set of gradient, $\nabla_{A_i}$, may have a value dependent on the efficiency estimate, $\tilde{\rho}_i$, in a direction of the perturbation $\tilde{a}_i$. For example the estimated set of gradient may be determined from

$$\nabla_{A_i} = \tilde{\rho}_i \tilde{a}_i - \nu e_i \oslash A_i$$

where $e_i$ is a vector of all 1s and $\oslash$ denotes elementwise division. The value of $\nu$ is a hyperparameter and may be zero; where it is not zero it may be small e.g. of order $10^{-6}$. The optional $\nu$ term may be considered a regularization term and encourages the values of $A_i$, i.e. the weights, back towards their initial values.

Determining a gradient of the efficiency estimate metric with respect to the set of mixing parameters, by making a perturbed, trial modification to the set of mixing parameters, facilitates determining how, and in which direction, to adjust the mixing parameters. More particularly (disregarding $\varepsilon$), if the mean return increases during the trial, the value of the rectifier function is zero, and the gradients are zero, and the trial set of mixing parameters may be retained as an updated set of mixing parameters. If the mean return decreases during the trial the mix adjust system 120i may adjust the mix in a direction opposite to the perturbation.

Thus at step 308 the process updates the set of mixing parameters according to the estimated set of gradients. In some implementations the set of mixing parameters, $A_i$, may be adjusted according to

$$A_i = softmax\left(\log A_i - \eta \nabla_{A_i}\right)$$

where $\eta$ is hyperparameter defining a mix adjust learning step size. Optionally $A_i$ may be clipped in logit space by a lower and/or upper bound; the bounds may have values e.g. in the range 1 to 10.

In some implementations $A_i$ may be initialized before the process of Figure 3 so that the weight of reward $r_i$ is close to unity and the weights of rewards $r_j$ are small. For example $A_i$ may be initialized with $A_{ii} = 0.99$ and $A_{ij} = \frac{0.01}{n-1}$ for $j \neq i$. Thus the process may start with an agent behaving "selfishly", but initializing with non-zero weights $A_{ij}$ can facilitate learning cooperation. Initializing with "selfish" behavior may help reduce the risk of the group of agents finding an efficient, but inequitable equilibrium.

In a variant of the above described process an egalitarian price of anarchy may be optimized. For example to minimize an egalitarian price of anarchy the following process may be used.

A combined reward among all agents is estimated. For example, each agent may send its combined reward to a coordinator (which may be one of the agents) which may then communicate to the group which agent has the lowest combined reward, agent "min". Alternatively, a coordinator may be avoided if each agent sends its combined reward to each other agent and each agent determines the agent with the minimum combined reward independently.

Each agent may then select a random perturbation, perturb their $A_i$, and monitor the combined reward of agent "min" for the duration of the trial (a trial length may be agreed upon by all agents). At the end of the trial each agent may then modify their $A_i$ according to whether the combined reward of agent "min" increased or decreased during the trial. For example if the combined reward of agent "min" increased (or stayed the same) the agents may each keep their $A_i$ unchanged. If the combined reward of agent "min" decreased the agents may each modify their $A_i$, in particular in a direction opposite to that of their perturbation, e.g. as previously described.

In some applications each agent of the group of agents comprises a robot or autonomous or semi-autonomous land or air or sea vehicle. Each of the tasks may comprise navigating a path through a physical environment from a start point to an end point. For example the start point may be a present location of the agent; the end point may be a destination of the agent. The first or each machine learning, e.g. reinforcement learning, objective-defining value may be dependent on an estimated time or distance for the first or each agent to physically move from the start point to the end point. For example a machine learning, e.g. reinforcement learning, objective may minimize an expected delay or maximize an expected reward or return (cumulative reward) dependent upon speed of movement of the agent; or a machine learning, e.g. reinforcement learning, objective may minimize an expected length of journey.

The first or each machine learning, e.g. reinforcement learning, system may receive observations which relate to movement of the agent along a path from the start point to the end point, such as average traffic speed for routes on a map through which the agents navigate. The observations may be discrete, e.g. from junctions, or they may extend over part or all of the length of a route; they may include data such as congestion indicators. This information may be provided from a remote source. The observations may optionally include map data defining a map of routes which include more than the start point and the end point e.g. of a local region.

In some applications the first or each machine learning, e.g. reinforcement learning, system may be or be combined with an e.g. recurrent, route-planning reinforcement learning neural network, and optionally including memory for storing routing map data.

The actions performed by the first or each machine learning, e.g. reinforcement learning, system may include navigation actions to select between different routes to the same end point. For example the actions may include steering or other direction control actions for an agent.

As previously noted, the rewards/returns may be dependent upon a time or distance between nodes of a route and/or between the start and end points. The routes may be defined, e.g. by roads, or in the case of a warehouse by gaps between stored goods, or the routes may be in free space e.g. for drone agents. The agents may comprise robots or vehicles performing a task such as warehouse, logistics, or factory automation, e.g. collecting, placing, or moving stored goods or goods or parts of goods during their manufacture; or the task performed by the agents may comprise package delivery control.

In some applications the machine learning, e.g. reinforcement learning, system(s) may be configured to control traffic signals, e.g. at junctions, in a similar way to that described above, to control the traffic flow of pedestrian traffic or human-controlled vehicles. The implementation details of such systems may be as previously described for robots and autonomous vehicles.

In some further related applications the technique is applied to simulations of such systems. For example such a simulation be used to design a route network such as a road network or warehouse or factory layout.

In general the observations may include, for example, one or more of images, object position data, and sensor data to capture observations as the agent interacts with the environment, for example sensor data from an image, distance, or position sensor or from an actuator. In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations. For example in the case of a robot the observations may include data characterizing the current state of the robot, e.g., one or more of: joint position, joint velocity, joint force, torque or acceleration, and global or relative pose of a part of the robot such as an arm and/or of an item held by the robot. The observations may also include, for example, sensed electronic signals such as motor current or a temperature signal; and/or image or video data for example from a camera or a LIDAR sensor, e.g., data from sensors of the agent or data from sensors that are located separately from the agent in the environment.

In these implementations, the actions may be control inputs to control the robot, e.g., torques for the joints of the robot or higher-level control commands; or to control the autonomous or semi-autonomous land or air or sea vehicle, e.g., torques to the control surface or other control elements of the vehicle or higher-level control commands; or e.g. motor control data. In other words, the actions can include for example, position, velocity, or force/torque/acceleration data for one or more joints of a robot or parts of another mechanical agent. Action data may include data for these actions and/or electronic control data such as motor control data, or more generally data for controlling one or more electronic devices within the environment the control of which has an effect on the observed state of the environment. For example in the case of an autonomous or semi-autonomous land or air or sea vehicle the actions may include actions to control navigation e.g. steering, and movement e.g braking and/or acceleration of the vehicle.

For example the simulated environment may be a simulation of a robot or vehicle agent and the reinforcement learning system may be trained on the simulation. For example, the simulated environment may be a motion simulation environment, e.g., a driving simulation or a flight simulation, and the agent is a simulated vehicle navigating through the motion simulation. In these implementations, the actions may be control inputs to control the simulated user or simulated vehicle. A simulated environment can be useful for training a reinforcement learning system before using the system in the real world. In another example, the simulated environment may be a video game and the agent may be a simulated user playing the video game. Generally in the case of a simulated environment the observations may include simulated versions of one or more of the previously described observations or types of observations and the actions may include simulated versions of one or more of the previously described actions or types of actions.

In the case of an electronic agent the observations may include data from one or more sensors monitoring part of a plant or service facility such as current, voltage, power, temperature and other sensors and/or electronic signals representing the functioning of electronic and/or mechanical items of equipment. In some applications the agent may control actions in a real-world environment including items of equipment, for example in a facility such as: a data center, server farm, or grid mains power or water distribution system, or in a manufacturing plant or service facility. The observations may then relate to operation of the plant or facility. For example additionally or alternatively to those described previously they may include observations of power or water usage by equipment, or observations of power generation or distribution control, or observations of usage of a resource or of waste production. The agent may control actions in the environment to increase efficiency, for example by reducing resource usage, and/or reduce the environmental impact of operations in the environment, for example by reducing waste. For example the agent may control electrical or other power consumption, or water use, in the facility and/or a temperature of the facility and/or items of equipment within the facility. The actions may include actions controlling or imposing operating conditions on items of equipment of the plant/facility, and/or actions that result in changes to settings in the operation of the plant/facility e.g. to adjust or turn on/off components of the plant/facility.

In some further applications, the environment is a real-world environment and the agent manages distribution of tasks across computing resources e.g. on a mobile device and/or in a data center. In these implementations, the actions may include assigning tasks to particular computing resources.

In another application the environment is a data packet communications network environment, and each agent of the group of agents comprises a router to route packets of data over the communications network. The first or each machine learning, e.g. reinforcement learning, objective-defining value may then be dependent on a routing metric for a path from the router to a next or further node in the data packet communications network, e.g. an estimated time for a group of one or more routed data packets to travel from the router to a next or further node in the data packet communications network. The observations may comprise e.g. observations of a routing table which includes the routing metrics. A route metric may comprise a metric of one or more of path length, bandwidth, load, hop count, path cost, delay, maximum transmission unit (MTU), and reliability. Optionally observations may include a route map including more than a node at which the router is located and a next node; optionally the first or each reinforcement learning system may comprise a recurrent neural network, and optionally memory for storing routing map data.

In another application the environment is an electrical power distribution environment. As power grids become more decentralized, for example because of the addition multiple smaller capacity, potentially intermittent renewable power generators, the additional interconnections amongst the power generators and consumers can destabilize the grid and a significant proportion of links can be subject to Braess's paradox where adding capacity can cause overload of a link e.g. particularly because of phase differences between connected points.

In such an environment each agent of the group of agents may be configured to control routing of electrical power from a node associated with the agent to one or more other nodes over one or more power distribution links, e.g. in a "smart grid". The first or each machine learning, e.g. reinforcement learning, objective-defining value may then be dependent on one or both of a loss and a frequency or phase mismatch over the one or more power distribution links. The observations may comprise e.g. observations of routing metrics such as capacity, resistance, impedance, loss, frequency or phase associated with one or more connections between nodes of a power grid. The actions may comprise control actions to control the routing of electrical power between the nodes. Optionally the first or each machine learning, e.g. reinforcement learning, system may be provided with observations of a routing table, similar to a computer network routing table, and including one or more of the routing metrics e.g. for each link. Such an approach may also be used in simulation to facilitate design or testing of a power grid, e.g. to determine locations for additional interconnects between nodes.

The agents may further comprise static or mobile software agents i.e. computer programs configured to operate autonomously and/or with other software agents or people to perform a task. For example the environment may be an integrated circuit routing environment and each agent of the group of agents may be configured to perform a routing task for routing interconnection lines of an integrated circuit such as an ASIC. The first or each machine learning, e.g. reinforcement learning, objective-defining value may be dependent on one or more routing metrics such as an interconnect resistance, capacitance, impedance, loss, speed or propagation delay, physical line parameters such as width, thickness or geometry, and design rules. The objectives may include one or more objectives relating to a global property of the routed circuitry e.g. component density, operating speed, power consumption, material usage, or a cooling requirement. The actions may comprise component placing actions e.g. to define a component position or orientation and/or interconnect routing actions e.g. interconnect selection and/or placement actions.

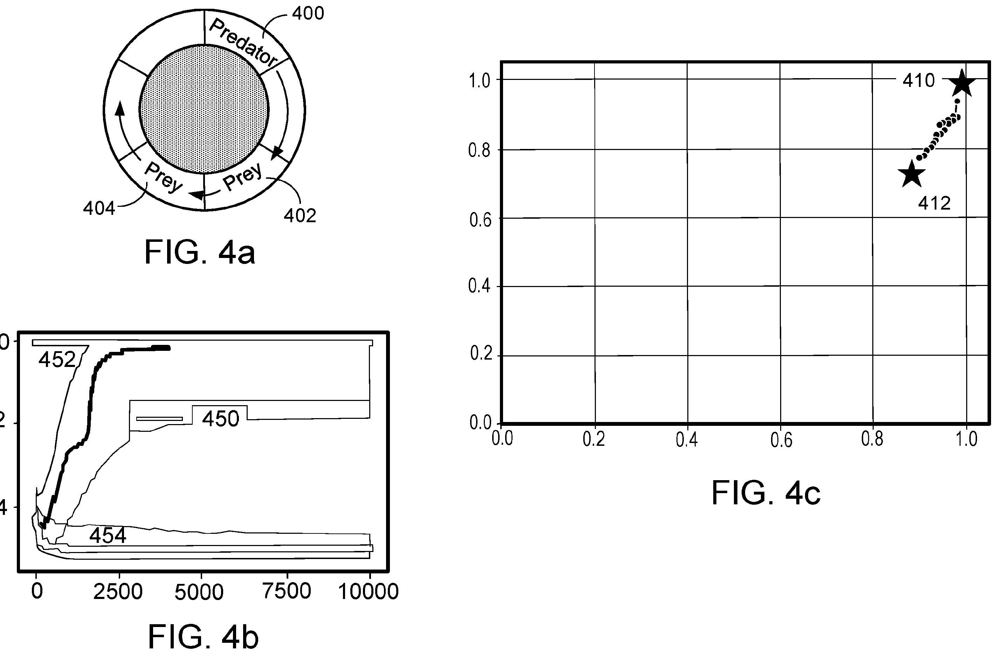

Figure 4 illustrates operation of the system in the toy environment of Figure 4a. In this environment a predator 400 chases two prey agents 402, 404 around a table; prey 402 can only escape if prey 404 simultaneously moves out of the way, as shown. The observations are the distances around the table of each prey from the predator and from the other prey. The prey receive 0 reward if they chose not to move, -0.01 if they attempt to move, and -1 if the predator is adjacent to them after moving. The agents used a version of the "REINFORCE" policy gradient reinforcement learning technique. Figure 4b shows a graph of reward against training epochs for the described technique 450, an optimal (fully cooperative) technique 452, and a convention "selfish" policy gradient technique 454 implemented by each prey (the shaded region shows ± one standard deviation). Figure 4b shows that the described technique approaches the optimal performance. Figure 4c shows, on respective axes, the attention weight of each prey agent to its own reinforcement learning loss (reward). Each agent starts with a weight for its own loss (reward) close to 1, at star 410. As learning progresses each agent learns to de-weight its own loss (reward), thus putting more weight on the other agent's loss (reward), ending at a mix of losses indicated by star 412.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can also be or further include special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a relationship graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

Certain features that are described in this specification in the context of separate embodiments can also be implemented in combination in a single embodiment. Conversely, various features that are described in the context of a single embodiment can also be implemented in multiple embodiments separately or in any suitable subcombination, provided this falls within the scope of the appended claims.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims.

**Claims**

1.   A computer-implemented method of training a first machine learning system (100i) to select actions to be performed by a first agent (102i) of a group of agents to control the first agent to perform a task in an environment (104) in response to observations of the environment (104), wherein whilst performing the task the first agent interacts with one or more other agents of the group of agents (102) in the environment respectively controlled by one or more other machine learning systems (100) to perform one or more other tasks, the method comprising:

receiving, from each of the other machine learning systems, a respective machine learning objective-defining value ($r_j$; $A_{ji}r_j$) used for training the other machine learning system;

determining a combined objective-defining value ($\hat{r}_i$) from a combination of a first machine learning objective-defining value ($r_i$) for the first machine learning system and the machine learning objective-defining values ($r_j$; $A_{ji}r_j$) received from the other machine learning systems, wherein the combination is defined by a set of mixing parameters ($A_i$);

training the first machine learning system using the combined objective-defining value;

adjusting (120a) the set of mixing parameters using gradient descent to optimize an efficiency estimate ($\tilde{\rho}_i$), wherein the efficiency estimate is dependent upon a rate of change of the combined objective value with time;

wherein adjusting the set of mixing parameters using gradient descent comprises determining a set of gradients ($\nabla_{A_i}$) of the efficiency estimate with respect to the set of mixing parameters, and adjusting the set of mixing parameters using the set of gradients;

wherein determining the set of gradients of the efficiency estimate comprises applying a trial modification to the set of mixing parameters to determine a trial set of mixing parameters, and determining the efficiency estimate using a trial combined objective-defining value for the first machine learning system where the trial combined objective-defining value is defined by the trial set of mixing parameters; and

wherein an incentive of the first machine learning system that is the first machine learning objective-defining value, is mixed with incentives of the other machine learning systems that are the machine learning objective-defining values received from the other machine learning systems, to define the combined objective-defining value, such that the first agent is incentivized to learn to cooperate with the other agents; and wherein either:

i) each agent of the group of agents comprises a robot or autonomous vehicle, wherein each of the tasks comprises navigating a path through the environment from a start point to an end point, and wherein the first machine learning objective-defining value is dependent on an estimated time or distance for the agent physically to move from the start point to the end point, wherein: either the environment is a real world environment, or the environment is a simulated environment used for training a reinforcement learning system before using it in the real world, wherein the observations relate to movement of the agent along the path from the start point to the end point, and wherein the agent is configured to select actions to control navigation of the robot or autonomous vehicle; or

ii) the environment is a data packet communications network environment, wherein each agent of the group of agents comprises a router to route packets of data over the communications network, and wherein the first machine learning objective-defining value is dependent on a routing metric for a path from the router to a next or further node in the data packet communications network, wherein the observations comprise observations of a routing table which includes the routing metric. the routing metric comprising one or more of path length, bandwidth, load, hop count, path cost, delay, maximum transmission unit (MTU), and reliability, and wherein the agent is configured to select actions to control the routing of the packets of data over the communications network; or

iii) the environment is an electrical power distribution environment, wherein each agent of the group of agents is configured to control routing of electrical power from a node associated with the agent to one or more other nodes over one or more power distribution links, and wherein the first machine learning objective-defining value is dependent on one or both of a loss and a frequency or phase mismatch over the one or more power distribution links, wherein the environment is either: a real world environment, the environment is a simulated environment to be used to facilitate design or testing of a power grid in the real world, and wherein the observations comprise capacity, resistance, impedance, loss, frequency or phase associated with the one or more power distribution links; or

iv) the environment is a real-world production plant or service facility, wherein each agent of the group of agents is an electronic agent configured to select actions to control or impose operating conditions on electronic and/or mechanical items of equipment in the production plant or service facility, and wherein the first machine learning objective-defining value is dependent on reducing electrical power consumption or water use by the production plant or service facility, wherein the observations include observations of power or water usage by the items of equipment, from one or more sensors monitoring part of the production plant or service facility.

2. A method as claimed in claim 1, wherein the efficiency estimate comprises a cost which has a higher value when the combined objective-defining value is worsening with time than when the combined objective-defining value is improving with time.

3. A method as claimed in claim 1 or 2, wherein determining the set of gradients of the efficiency estimate includes adding a regularization term (v) to the set of gradients to inhibit adjusting the set of mixing parameters away from the first machine learning objective-defining value.

4. A method as claimed in any of claims 1-3, wherein the trial modification to the set of mixing parameters defines a direction, and wherein adjusting the set of mixing parameters using the set of gradients comprises adjusting the set of mixing parameters in the opposite direction in response to the combined objective-defining value worsening while the trial modification to the set of mixing parameters is applied.

5. A method as claimed in claim 4, wherein determining the efficiency estimate comprises estimating a rate of change of the trial combined objective-defining value with time by determining a change in the trial combined objective-defining value over multiple machine learning time steps; in particular wherein determining the efficiency estimate comprises determining a difference between first and second mean returns from the trial combined objective-defining value at the respective start and end of a trial period.

6. A method as claimed in any preceding claim, wherein determining the combined objective-defining value comprises determining a linear combination of the first machine learning objective-defining value and the machine learning objective-defining values received from the other machine learning systems each weighted by a respective one of the mixing parameters.

7. A method as claimed in any preceding claim, further comprising sending the first machine learning objective-defining value to each of the one or more other machine learning systems.

8. A method as claimed in any preceding claim, wherein the first machine learning system includes a policy neural network (110i) to receive observations of the environment and to select the actions to be performed by the first agent in response to the observations, wherein the policy neural network has a plurality of policy neural network parameters, and wherein training the first machine learning system comprises adjusting the policy neural network parameters using gradient descent to optimize an objective defined by the combined objective-defining value.

9. A method as claimed in any preceding claim, wherein the first machine learning objective-defining value and the machine learning objective-defining values from the other machine learning systems each comprise the value of a loss function dependent on, or the value of a reward received in response to, respectively, an action of the first agent and an action each of the one or more other agents.

10. A method as claimed in any preceding claim, wherein the efficiency estimate is component of a cost of inefficiency of the group of agents performing their respective tasks in the environment.

11. A method as claimed in any preceding claim, wherein the method is also implemented by each of the one or more other machine learning systems.

12. A method as claimed in any preceding claim wherein the first machine learning system is a first reinforcement learning system, and wherein each of the other machine learning systems are reinforcement learning systems.

13. One or more computer-readable storage media storing instructions that when executed by one or more computers cause the one or more computers to perform the method of any one of claims 1-12.

14. A system comprising one or more computers and one or more storage devices storing instructions that when executed by one or more computers cause the one or more computers to perform the method of any one of claims 1-12

15. A system comprising a group of machine learning systems each to control a respective one of group of agents, wherein each of the machine learning systems comprises the system of claim 14.

**Patentansprüche**

1. Computerimplementiertes Verfahren zum Trainieren eines ersten maschinellen Lernsystems (100i), um Aktionen auszuwählen, die von einem ersten Agenten (102i) einer Gruppe von Agenten durchzuführen sind, um den ersten Agenten zu steuern, eine Aufgabe in einer Umgebung (104) als Reaktion auf Beobachtungen der Umgebung (104) durchzuführen, wobei während des Durchführens der Aufgabe der erste Agent mit einem oder mehreren anderen Agenten der Gruppe von Agenten (102) in der Umgebung interagiert, die jeweils von einem oder mehreren anderen maschinellen Lernsystemen (100) gesteuert werden, um eine oder mehrere andere Aufgaben durchzuführen, wobei das Verfahren Folgendes umfasst:

Empfangen eines jeweiligen zieldefinierenden Wertes für maschinelles Lernen ($r_j$; $A_{ji}$-$r_j$) von jedem der anderen maschinellen Lernsysteme, der zum Trainieren des anderen maschinellen Lernsystems verwendet wird;

Bestimmen eines kombinierten zieldefinierenden Wertes ($\tilde{r}_i$) aus einer Kombination eines ersten definierenden Wertes für maschinelles Lernen ($r_i$) für das erste maschinelle Lernsystem und den zieldefinierenden Werten für maschinelles Lernen ($r_j$; $A_{ji}r_j$), die von den anderen maschinellen Lernsystemen empfangen werden, wobei die Kombination durch einen Satz von Mischparametern ($A_i$) definiert ist;

Trainieren des ersten maschinellen Lernsystems unter Verwendung des kombinierten zieldefinierenden Wertes;

Anpassen (120a) des Satzes von Mischparametern unter Verwendung von Gradientenabstieg, um eine Effizienzschätzung ($\tilde{\rho}_i$), zu optimieren, wobei die Effizienzschätzung von einer Änderungsrate des kombinierten Zielwertes mit der Zeit abhängt;

wobei das Anpassen des Satzes von Mischparametern unter Verwendung von Gradientenabstieg Bestimmen eines Satzes von Gradienten ($\nabla_{Ai}$) der Effizienzschätzung in Bezug auf den Satz von Mischparametern und Anpassen des Satzes von Mischparametern unter Verwendung des Satzes von Gradienten umfasst;

wobei das Bestimmen des Satzes von Gradienten der Effizienzschätzung Anwenden einer Versuchsmodifikation auf den Satz von Mischparametern, um einen Versuchssatz von Mischparametern zu bestimmen, und Bestimmen der Effizienzschätzung unter Verwendung eines kombinierten zieldefinierenden Versuchswertes für das erste maschinelle Lernsystem umfasst, wobei der kombinierte zieldefinierende Versuchswert durch den Versuchssatz von Mischparametern definiert ist; und

wobei ein Anreiz des ersten maschinellen Lernsystems, der den ersten zieldefinierenden Wert für maschinelles Lernen darstellt, mit Anreizen der anderen maschinellen Lernsysteme gemischt wird, bei denen es sich um die zieldefinierenden Werte für maschinelles Lernen handelt, die von den anderen maschinellen Lernsystemen empfangen werden, um den kombinierten zieldefinierenden Wert zu definieren, sodass der erste Agent einen Anreiz hat, zu lernen, mit den anderen Agenten zu kooperieren; und wobei entweder:

i) jeder Agent der Gruppe von Agenten einen Roboter oder ein autonomes Fahrzeug umfasst, wobei jede der Aufgaben Navigieren eines Pfades durch die Umgebung von einem Startpunkt zu einem Endpunkt umfasst, und wobei der erste zieldefinierende Wert für maschinelles Lernen von einer geschätzten Zeit oder Distanz für den Agenten abhängt, sich physisch von dem Startpunkt zu dem Endpunkt zu bewegen, wobei: entweder die Umgebung eine reale Umgebung ist oder die Umgebung eine simulierte Umgebung ist, die zum Trainieren eines Verstärkungslernsystems verwendet wird, bevor es in der realen Welt verwendet wird, wobei sich die Beobachtungen auf die Bewegung des Agenten entlang des Pfades von dem Startpunkt zu dem Endpunkt beziehen, und wobei der Agent dazu konfiguriert ist, Aktionen auszuwählen, um die Navigation des Roboters oder des autonomen Fahrzeugs zu steuern; oder

ii) die Umgebung eine Datenpaket-Kommunikationsnetz-Umgebung ist, wobei jeder Agent der Gruppe von Agenten einen Router umfasst, um Datenpakete über das Kommunikationsnetz zu leiten, und wobei der erste zieldefinierende Wert für maschinelles Lernen von einer Routing-Metrik für einen Pfad von dem Router zu einem nächsten oder weiteren Knoten in dem Datenpaket-Kommunikationsnetz abhängt, wobei die Beobachtungen Beobachtungen einer Routing-Tabelle umfassen, die die Routing-Metrik beinhaltet, wobei die Routing-Metrik eines oder mehrere von Pfadlänge, Bandbreite, Auslastung, Hop-Zahl, Pfadkosten, Verzögerung, maximale Übertragungseinheit (MTU) und Zuverlässigkeit umfasst, und wobei der Agent dazu konfiguriert ist, Aktionen zum Steuern des Routings der Datenpakete über das Kommunikationsnetz auszuwählen; oder

iii) die Umgebung eine elektrische Energieverteilungsumgebung ist, wobei jeder Agent der Gruppe von Agenten dazu konfiguriert ist, die Leitung elektrischer Energie von einem dem Agenten zugeordneten Knoten zu einem oder mehreren anderen Knoten über eine oder mehrere Energieverteilungsverbindungen zu steuern, und wobei der erste zieldefinierende Wert für maschinelles Lernen von einem Verlust und/oder einer Frequenz- oder Phasenfehlanpassung über die eine oder mehrere Energieverteilungsverbindungen abhängig ist, wobei die Umgebung entweder eine reale Umgebung oder die Umgebung eine simulierte Umgebung ist, die dazu verwendet wird, die Konstruktion oder das Testen eines Stromnetzes in der realen Welt zu erleichtern, und wobei die Beobachtungen Kapazität, Widerstand, Impedanz, Verlust, Frequenz oder Phase umfassen, die der einen oder den mehreren Stromverteilungsverbindungen zugeordnet sind; oder iv) die Umgebung eine reale Produktionsanlage oder Dienstleistungseinrichtung ist, wobei jeder Agent der Agentengruppe ein elektronischer Agent ist, der dazu konfiguriert ist, Aktionen auszuwählen, um elektronische und/oder mechanische Ausrüstungsgegenstände in der Produktionsanlage oder Dienstleistungseinrichtung zu steuern oder Betriebsbedingungen aufzuerlegen, und wobei der erste zieldefinierende Wert für maschinelles Lernen vom Verringern des Stromverbrauchs oder des Wasserverbrauchs durch die Produktionsanlage oder Dienstleistungseinrichtung abhängt, wobei die Beobachtungen Beobachtungen des Strom- oder Wasserverbrauchs durch die Ausrüstungsgegenstände von einem oder mehreren Sensoren umfassen, die einen Teil der Produktionsanlage oder Dienstleistungseinrichtung überwachen.

2. Verfahren nach Anspruch 1, wobei die Effizienzschätzung einen Kostenwert umfasst, der einen höheren Wert hat, wenn sich der kombinierte zieldefinierende Wert mit der Zeit verschlechtert, als wenn sich der kombinierte zieldefinierende Wert mit der Zeit verbessert.

3. Verfahren nach Anspruch 1 oder 2, wobei das Bestimmen des Satzes von Gradienten der Effizienzschätzung Hinzufügen eines Regularisierungsterms (v) zu dem Satz von Gradienten beinhaltet, um zu verhindern, dass der Satz von Mischparametern von dem ersten zieldefinierenden Wert für maschinelles Lernen angepasst wird.

4. Verfahren nach einem der Ansprüche 1 bis 3, wobei die Versuchsmodifikation des Satzes von Mischparametern eine Richtung definiert und wobei das Anpassen des Satzes von Mischparametern unter Verwendung des Satzes von Gradienten Anpassen des Satzes von Mischparametern in der entgegengesetzten Richtung als Reaktion auf das Verschlechtern des kombinierten zieldefinierenden Wertes umfasst, während die Versuchsmodifikation des Satzes von Mischparametern angewendet wird.

5. Verfahren nach Anspruch 4, wobei das Bestimmen der Effizienzschätzung Schätzen einer Änderungsrate des kombinierten zieldefinierenden Versuchswertes mit der Zeit umfasst, indem eine Änderung des kombinierten zieldefinierenden Versuchswertes über mehrere maschinelle Lernzeitschritte bestimmt wird; insbesondere wobei das Bestimmen der Effizienzschätzung Bestimmen einer Differenz zwischen ersten und zweiten mittleren Erträgen aus dem kombinierten zieldefinierten Versuchswert zu Beginn bzw. am Ende einer Versuchsperiode umfasst.

6. Verfahren nach einem der vorhergehenden Ansprüche, wobei das Bestimmen des kombinierten zieldefinierenden Wertes Bestimmen einer linearen Kombination des ersten zieldefinierenden Wertes für maschinelles Lernen und der zieldefinierenden Werte für maschinelles Lernen, die von den anderen maschinellen Lernsystemen empfangen wurden, umfasst, wobei jeder mit einem entsprechenden einen der Mischparameter gewichtet wird.

7. Verfahren nach einem der vorhergehenden Ansprüche, ferner umfassend Senden des ersten zieldefinierenden Wertes für maschinelles Lernen an jedes von dem einen oder den mehreren anderen maschinellen Lernsysteme.

8. Verfahren nach einem der vorhergehenden Ansprüche, wobei das erste maschinelle Lernsystem ein neuronales Regelnetz (110i) beinhaltet, um Beobachtungen der Umgebung zu empfangen und die von dem ersten Agenten als Reaktion auf die Beobachtungen durchzuführenden Aktionen auszuwählen, wobei das neuronale Regelnetz eine Vielzahl von neuronalen Regelnetzparametern aufweist und wobei das Trainieren des ersten maschinellen Lernsystems Anpassen der neuronalen Regelnetzparameter unter Verwendung von Gradientenabstieg umfasst, um ein durch den kombinierten zieldefinierenden Wert definiertes Ziel zu optimieren.

9. Verfahren nach einem der vorhergehenden Ansprüche, wobei der erste zieldefinierende Wert für maschinelles Lernen und die zieldefinierenden Werte für maschinelles Lernen der anderen maschinellen Lernsysteme jeweils den Wert einer Verlustfunktion, die von einer Aktion des ersten Agenten abhängt, bzw. den Wert einer Belohnung, die als Reaktion auf eine Aktion des ersten Agenten bzw. eine Aktion des einen oder der mehreren anderen Agenten empfangen wird, umfassen.

**10.** Verfahren nach einem der vorhergehenden Ansprüche, wobei die Effizienzschätzung eine Komponente der Ineffizienzkosten der Gruppe von Agenten ist, die ihre jeweiligen Aufgaben in der Umgebung durchführen.

**11.** Verfahren nach einem der vorhergehenden Ansprüche, wobei das Verfahren auch von jedem des einen oder der mehreren anderen maschinellen Lernsysteme implementiert wird.

**12.** Verfahren nach einem der vorhergehenden Ansprüche, wobei das erste maschinelle Lernsystem ein erstes Verstärkungslernsystem ist und wobei jedes der anderen maschinellen Lernsysteme ein Verstärkungslernsystem ist.

**13.** Ein oder mehrere Computerspeichermedien, die Anweisungen speichern, die bei Ausführung durch einen oder mehrere Computer den einen oder die mehreren Computer veranlassen, das Verfahren nach einem der Ansprüche 1-12 durchzuführen.

**14.** System, umfassend einen oder mehrere Computer und eine oder mehrere Speichervorrichtungen, die Anweisungen speichern, die bei Ausführung durch einen oder mehrere Computer den einen oder die mehreren Computer veranlassen, das Verfahren nach einem der Ansprüche 1-12 durchzuführen.

**15.** System, umfassend eine Gruppe von maschinellen Lernsystemen, von denen jedes einen entsprechenden Agenten der Gruppe von Agenten steuert, wobei jedes der maschinellen Lernsysteme das System nach Anspruch 14 umfasst.

**Revendications**

**1.** Procédé mis en œuvre par ordinateur de formation d'un premier système d'apprentissage automatique (100i) pour sélectionner des actions à effectuer par un premier agent (102i) d'un groupe d'agents pour contrôler le premier agent pour effectuer une tâche dans un environnement (104) en réponse à des observations de l'environnement (104), dans lequel tout

en effectuant la tâche, le premier agent interagit avec un ou plusieurs autres agents du groupe d'agents (102) dans l'environnement respectivement contrôlé par un ou plusieurs autres systèmes d'apprentissage automatique (100) pour effectuer une ou plusieurs autres tâches, le procédé comprenant :

la réception, à partir de chacun des autres systèmes d'apprentissage automatique, d'une valeur respective définissant un objectif d'apprentissage automatique ($r_j$ ; $A_{ji}r_j$) utilisée pour former

l'autre système d'apprentissage automatique ;
la détermination d'une valeur combinée définissant un objectif ($\tilde{r}_i$) à partir d'une combinaison d'une première valeur définissant un objectif d'apprentissage automatique ($r_i$) pour le premier système d'apprentissage automatique et des valeurs définissant un objectif d'apprentissage automatique ($r_j$ ; $A_{ji}r_j$) reçues des autres systèmes d'apprentissage automatique, dans lequel la combinaison est définie par un ensemble de paramètres de mélange ($A_i$) ;
la formation du premier système d'apprentissage automatique à l'aide de la valeur combinée définissant un objectif ;
l'ajustement (120a) de l'ensemble de paramètres de mélange à l'aide d'une descente de gradient pour optimiser une estimation d'efficacité ($\tilde{\rho}_i$), dans lequel l'estimation d'efficacité dépend d'un taux de variation de la valeur objective combinée avec le temps ;
dans lequel l'ajustement de l'ensemble de paramètres de mélange à l'aide d'une descente de gradient comprend la détermination d'un ensemble de gradients ($\nabla_{Ai}$) de l'estimation d'efficacité par rapport à l'ensemble de paramètres de mélange, et l'ajustement de l'ensemble de paramètres de mélange à l'aide de l'ensemble de gradients ;
dans lequel la détermination de l'ensemble de gradients de l'estimation d'efficacité comprend l'application d'une modification d'essai à l'ensemble de paramètres de mélange pour déterminer un ensemble d'essai de paramètres de mélange, et la détermination de l'estimation d'efficacité à l'aide d'une valeur combinée d'essai définissant un objectif pour le premier système d'apprentissage automatique où la valeur combinée d'essai définissant un objectif est définie par l'ensemble d'essai de paramètres de mélange ; et
dans lequel une incitation du premier système d'apprentissage automatique, qui est la première valeur définissant un objectif d'apprentissage automatique, est mélangée à des incitations des autres systèmes d'apprentissage automatique qui sont les valeurs définissant un objectif d'apprentissage automatique reçues des autres systèmes d'apprentissage automatique, pour définir la valeur combinée définissant un objectif, de sorte que le premier agent est incité à apprendre à coopérer avec les autres agents ; et dans lequel soit :

i) chaque agent du groupe d'agents comprend un robot ou un véhicule autonome, dans lequel chacune des tâches comprend la navigation sur un chemin à travers l'environnement d'un point de départ à un point d'arrivée, et dans lequel la première valeur définissant un objectif d'apprentissage automatique dépend d'un temps ou d'une distance estimée nécessaire à l'agent pour se déplacer physiquement du point de départ au point d'arrivée, dans lequel : soit l'environnement est un environnement du monde réel, soit l'environnement est un environnement simulé utilisé pour former un système d'apprentissage par renforcement avant son utilisation dans le monde réel, dans lequel les observations se rapportent au mouvement de l'agent le long du chemin du point de départ au point d'arrivée, et dans lequel l'agent est configuré pour sélectionner des actions pour contrôler la navigation du robot ou du véhicule autonome ; ou

ii) l'environnement est un environnement de réseau de communication par paquets de données, dans lequel chaque agent du groupe d'agents comprend un routeur pour acheminer des paquets de données sur le réseau de communication, et dans lequel la première valeur définissant un objectif d'apprentissage automatique dépend d'une métrique de routage pour un chemin allant du routeur à un nœud suivant ou à un nœud supplémentaire dans le réseau de communication par paquets de données, dans lequel les observations comprennent des observations d'une table de routage qui comporte la métrique de routage, la métrique de routage comprenant l'un ou plusieurs éléments parmi la longueur de chemin, la bande passante, la charge, le nombre de sauts, le coût de chemin, le délai, l'unité de transmission maximale (MTU), et la fiabilité, et dans lequel l'agent est configuré pour sélectionner des actions pour contrôler le routage des paquets de données sur le réseau de communication ; ou

iii) l'environnement est un environnement de distribution d'énergie électrique, dans lequel chaque agent du groupe d'agents est configuré pour contrôler le routage de l'énergie électrique d'un nœud associé à l'agent vers un ou plusieurs autres nœuds via une ou plusieurs liaisons de distribution d'énergie, et dans lequel la première valeur définissant un objectif d'apprentissage automatique dépend d'une perte ou d'une inadéquation de fréquence ou de phase ou des deux sur les une ou plusieurs liaisons de distribution d'énergie, dans lequel l'environnement est soit : un environnement du monde réel, l'environnement est un environnement simulé destiné à être utilisé pour faciliter la conception ou les tests d'un réseau électrique dans le monde réel, et dans lequel les observations comprennent la capacité, la résistance, l'impédance, la perte, la fréquence ou la phase associées aux une ou plusieurs liaisons de distribution d'énergie ; ou

iv) l'environnement est une usine de production ou une installation de service du monde réel, dans lequel chaque agent du groupe d'agents est un agent électronique configuré pour sélectionner des actions pour contrôler ou imposer des conditions de fonctionnement sur des éléments d'équipement électroniques et/ou mécaniques dans l'usine de production ou l'installation de service, et dans lequel la première valeur définissant un objectif d'apprentissage automatique dépend de la réduction de la consommation d'énergie électrique ou de l'utilisation d'eau par l'usine de production ou l'installation de service, dans lequel les observations comportent des observations sur l'utilisation d'énergie ou d'eau par les éléments d'équipement, provenant d'un ou plusieurs capteurs surveillant une partie de l'usine de production ou de l'installation de service.

2. Procédé selon la revendication 1, dans lequel l'estimation d'efficacité comprend un coût qui a une valeur plus élevée lorsque la valeur combinée définissant un objectif se dégrade avec le temps que lorsque la valeur combinée définissant un objectif s'améliore avec le temps.

3. Procédé selon la revendication 1 ou 2, dans lequel la détermination de l'ensemble de gradients de l'estimation d'efficacité comporte l'ajout d'un terme de régularisation (v) à l'ensemble de gradients pour empêcher l'ajustement de l'ensemble de paramètres de mélange qui s'éloigne de la première valeur définissant un objectif d'apprentissage automatique.

4. Procédé selon l'une quelconque des revendications 1 à 3, dans lequel la modification d'essai de l'ensemble de paramètres de mélange définit une direction, et dans lequel l'ajustement de l'ensemble de paramètres de mélange à l'aide de l'ensemble de gradients comprend l'ajustement de l'ensemble de paramètres de mélange dans la direction opposée en réponse à la détérioration de la valeur combinée définissant un objectif pendant que la modification d'essai de l'ensemble de paramètres de mélange est appliquée.

5. Procédé selon la revendication 4, dans lequel la détermination de l'estimation d'efficacité comprend l'estimation d'un taux de variation de la valeur combinée d'essai définissant un objectif en fonction du temps, en déterminant une variation de la valeur combinée d'essai définissant un objectif sur plusieurs pas de temps d'apprentissage automatique ; en particulier

dans lequel la détermination de l'estimation d'efficacité comprend la détermination d'une différence entre des premier et second retours moyens à partir de la valeur combinée d'essai définissant un objectif au début et à la fin respectifs d'une période d'essai.

6. Procédé selon une quelconque revendication précédente, dans lequel la détermination de la valeur combinée définissant un objectif comprend la détermination d'une combinaison linéaire de la première valeur définissant un objectif d'apprentissage automatique et des valeurs définissant un objectif d'apprentissage automatique reçues des autres systèmes d'apprentissage automatique, chacune pondérée par un paramètre respectif des paramètres de mélange.

7. Procédé selon une quelconque revendication précédente, comprenant également l'envoi de la première valeur définissant un objectif d'apprentissage automatique à chacun des un ou plusieurs autres systèmes d'apprentissage automatique.

8. Procédé selon une quelconque revendication précédente, dans lequel le premier système d'apprentissage automatique comporte un réseau neuronal de politique (110i) pour recevoir des observations de l'environnement et pour sélectionner les actions à effectuer par le premier agent en réponse aux observations, dans lequel le réseau neuronal de politique a une pluralité de paramètres de réseau neuronal de politique, et dans lequel la formation du premier système d'apprentissage automatique comprend l'ajustement des paramètres de réseau neuronal de politique à l'aide d'une descente de gradient pour optimiser un objectif défini par la valeur combinée définissant un objectif.

9. Procédé selon une quelconque revendication précédente, dans lequel la première valeur définissant un objectif d'apprentissage automatique et les valeurs définissant un objectif d'apprentissage automatique provenant des autres systèmes d'apprentissage automatique comprennent chacune la valeur d'une fonction de perte dépendant de, ou la valeur d'une récompense reçue en réponse à, respectivement, une action du premier agent et une action de chacun des un ou plusieurs autres agents.

10. Procédé selon une quelconque revendication précédente, dans lequel l'estimation d'efficacité est une composante d'un coût d'inefficacité du groupe d'agents effectuant leurs tâches respectives dans l'environnement.

11. Procédé selon une quelconque revendication précédente, dans lequel le procédé est également mis en œuvre par chacun des un ou plusieurs autres systèmes d'apprentissage automatique.

12. Procédé selon une quelconque revendication précédente, dans lequel le premier système d'apprentissage automatique est un premier système d'apprentissage par renforcement, et dans lequel chacun des autres systèmes d'apprentissage automatique est un système d'apprentissage par renforcement.

13. Un ou plusieurs supports de stockage lisibles par ordinateur stockant des instructions qui, lorsqu'elles sont exécutées par un ou plusieurs ordinateurs, amènent les un ou plusieurs ordinateurs à effectuer le procédé selon l'une quelconque des revendications 1 à 12.

14. Système comprenant un ou plusieurs ordinateurs et un ou plusieurs dispositifs de stockage stockant des instructions qui, lorsqu'elles sont exécutées par un ou plusieurs ordinateurs, amènent les un ou plusieurs ordinateurs à effectuer le procédé selon l'une quelconque des revendications 1 à 12.

15. Système comprenant un groupe de systèmes d'apprentissage automatique, chacun permettant de contrôler un agent respectif d'un groupe d'agents, dans lequel chacun des systèmes d'apprentissage automatique comprend le système selon la revendication 14.

Figure 1

EP 4 094 196 B1

200

RECEIVE OBSERVATION Oi CHARACTERIZING
A STATE OF THE ENVIRONMENT

202

PROCESS Oi USING ACTION SELECTION
POLICY NEURAL NETWORK TO DETERMINE
AN ACTION Ai

204

RECEIVE NEXT OBSERVATION Oi AND
REWARD Ri FROM THE ENVIRONMENT

206

BROADCAST Ri AND MIXING WEIGHT Aij TO
MACHINE LEARNING SYSTEM j AND RECEIVE
REWARD Rj AND MIXING WEIGHT Aji FROM
MACHINE LEARNING SYSTEM j

208

DETERMINE COMBINED REWARD

210

PERFORM ITERATION OF MACHINE LEARNING
PROCESS

212

DETERMINE RETURN

# Figure 2

300

DETERMINE DIRECTION OF A TRIAL
PERTURBATION TO THE SET OF MIXING
PARAMETERS, A TRIAL SET OF MIXING
PARAMETERS, AND A TRIAL DURATION

302

FOR TRIAL DURATION: OBTAIN RETURN FROM
TRAINING EPISODE USING THE TRIAL SET OF
MIXING PARAMETERS; UPDATE A MEAN
RETURN

304

DETERMINE EFFICIENCY ESTIMATE FROM
CHANGE IN MEAN RETURN

306

DETERMINE A SET OF GRADIENTS OF
EFFICIENCY ESTIMATE WITH RESPECT TO
THE SET OF MIXING PARAMETERS

308

UPDATE SET OF MIXING PARAMETERS
ACCORDING TO THE SET OF GRADIENTS

# Figure 3

FIG. 4c

FIG. 4a

FIG. 4b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019354867 A

**Non-patent literature cited in the description**

- **WANG et al.** Integrating Reinforcement Learning with Multi-Agent Techniques for Adaptive Service Composition. *ACM Transactions on Autonomous and Adaptive Systems, Association For Computing Machinery*, May 2017, vol. 12 (2), 1-42